# EUROPEAN PATENT SPECIFICATION

(11) **EP 1 510 459 B1**
(45) Date of publication and mention of the grant of the patent: **09.01.2008**
(21) Application number: 03757077.7
(22) Date of filing: 02.06.2003
(51) Int. Cl.: B65B 7/16, B29C 65/08, B65B 51/22, B29C 65/74

(54) **DEVICE FOR CLOSING CONTAINERS MADE OF PLASTIC**
VORRICHTUNG ZUM SCHLIESSEN VON BEHÄLTERN AUS KUNSTSTOFF
DISPOSITIF DE FERMETURE DE CONDITIONNEMENTS EN PLASTIQUE

(30) Priority: 05.06.2002 ES 200201290
(43) Date of publication of application: 02.03.2005
(73) Proprietor: Miret Gayet, Xavier, 08011 Barcelona (ES)
(72) Inventor: Miret Gayet, Xavier, 08011 Barcelona (ES)
(74) Representative: Carvajal y Urquijo, Isabel
(86) International application number: PCT/ES2003/000265
(87) International publication number: WO 2003/104084

(56) References cited:
- EP-A1- 1 043 055
- DE-A- 1 511 578
- ES-A1- 2 166 298
- FR-A- 857 027
- PATENT ABSTRACTS OF JAPAN & JP 03 240 632 A (SUMITOMO BAKELITE CO LTD) 28 October 1991
- PATENT ABSTRACTS OF JAPAN & JP 2001 138401 A (NISSEI TECHNO KK) 22 May 2001

## Description

### Object of the Invention

The present invention refers to a system for sealing containers of plastic material which carries out the cutting and welding operations simultaneously, and which is used for the sealing and cutting of blister-type containers and the like in continuous assembly lines, based on the use of molds together with the use of an ultrasonic emitter device.

### Background of the Invention

Given the current demand for plastic containers used for containing a multitude of products, it is necessary to achieve that packaging devices carry out the packaging operation at the fastest possible rate and with low costs.

As a result, a large variety of devices have been developed for the sealing of this type of containers.

These devices are usually of the thermal-type, i.e. thy use heat to melt the material constituting the cover of the container and join it to the container itself. These systems have the drawback of usually being expensive due to the necessity of applying heat-weld lacquers on one of the sides to be joined. Furthermore, the finish is of low-quality, causing folds and curling up of the containers when they are cooled.

Devices for welding blister-type plastic containers or the like are also known which use the effect of high frequency to achieve the heating of the plastic material and the subsequent welding thereof.

European patent EP-A-0493690 discloses an apparatus used for welding a plastic material cover to a can-shaped recipient, the apparatus has a tool which is attached to the outside of the cover or to the outside of the recipient, and an inner tool which is inserted in the cover, the inner tool being a sonotrode and the outer tool a cone-shaped ring which can radially shift to achieve the sealing of the recipient.

This device only has the function of welding a cover to an independent recipient, not being able to be used for blister-type containers or for several recipients at the same time, which makes it rather uninteresting given that unitary welding times are high. Furthermore, this device does not have the possibility of simultaneously cutting the plastic of the containers.

Spanish patent ES-A-2100777 discloses an ultrasonic cutting and welding device especially applied to cushioned fabrics, comprising shifting means, position fixing means and an ultrasonic emitter device or sonotrode. There is an upper guide element and a lower guide element on the end of the sonotrode, and a cutting element of a material which transmits the ultrasounds is fixed to the sonotrode. Furthermore, the lower guide element is movable and allows carrying out the cutting of the cloths and of the filler fabric simultaneously to the welding between the same cloths, along the cut line. This device has a cutting wheel which cuts the fabric, and the recently cut ends are welded by means of the action of the sonotrode, the cutting and welding being carried out in a single action. The particular configuration of this apparatus makes the cut line and the weld line coincide which, due to the small thickness of the edge of the cutting wheel, makes the joints obtained by means of the apparatus not very strong given that the weld strip is of a small width.

ES 2 166 298 discloses a system for ultrasonic welding over extensive working areas, like for example the simultaneous sealing of a considerable number of containers set out in said area, with uniformity of sealing over the entire surface thereof, regardless of its size. The system is based on a battery of sonotrodes pertaining to ultrasonic units functionally independent from each other, battery in which said sonotrodes are arranged forming a mosaic in which they are considerably close to each other, being separated by very reduced spaces.

FR 857 027 discloses a device having a plurality of molds for receiving the recipients to be sealed, having cutting means in relation to the mold and a countermold actuated by a press for individually cutting the recipients and their sealing covers at the same time the press apply over the recipients the sealing film forming the sealing cover of the recipients.

JP 3 240 632 discloses a blade of a receptacle stand of an ultrasonic sonotrode having a tapered shape, for example, tapered toward the tip at an angle of 10 - 60 deg., or tapered toward the tip at an angle of 10 - 30 deg., raised gradually, and curved toward the tip. The proportion (T/t) of the thickness T of the receiving stand to the total thickness t of the bound part of a surface material and a rear material is 0.5 - 10. The height t1 of the blade is in a relationship of t > t1. The surface material made of transparent plastic and the rear material are welded together at a joining area. The blister pack main body (surface material) and the rear material as a cover are simultaneously supplied onto the blade shaped receiving stand. Then, the highfrequency sonotrode is pressed on the receiving stand with ultrasonic waves radiated, and welding and cutting are performed at the same time.

JP 2001 138401 discloses a die for high frequency welding of a polyolefin-based film or sheet mounted on either one of electrodes to weld the polyolefin-based film or sheet to itself or to weld the polyolefin-based film or sheet to a formed product by means of high frequency wherein a cutter is disposed on a side surface of the die, the die having a surface inclined with respect to the top surface of the die, the inclination being increased as the die approaches the cutter to form a cut portion having an R-shaped inclined cross section.

### Description of the Invention

The system for sealing containers of plastic material object of the present application attempts to correct, as much as possible, the different drawbacks posed above.

The system of sealing containers of plastic material proposed by the present invention is especially used for the sealing of a plurality of containers, the mouth of each container being surrounded by a peripheral flap in extension of its walls, a sealing sheet being arranged on said mouth of the container or containers to be sealed.

The system is based on the use of a plurality of equipment producing ultrasonic vibrations used for the welding of the plastic material, sonotrodes will specifically be used, which are independent from one another and are separated by a small space.

These sonotrodes will emit vibrations on the sealing sheet and the peripheral flap which, in turn, are supported on a series of molds.

Said molds consist of concentric walls situated in coincidence with the peripheral flap surrounding the mouth of the container or containers to be sealed.

The mold has an inner wall allowing for the welding between the sealing sheet and the peripheral flap of the mouth, said inner wall is finished in an edge of a large angular width profile, i.e. its flanks form an obtuse angle, next to this inner wall and concentrically thereto, the mold has another outer wall of a slightly larger height, finished in an edge of a small angular width profile, i.e. its flanks form an acute angle, suitable for causing the cutting of the sealing sheet and of said peripheral flap at a certain variable separating distance of the weld line defined by the inner wall. The inner wall may have a broken edge a broken edge, being defined by a series of projections which can adopt a wide range of configurations with regard to their shape.

This small separation between the weld line and the cut line makes the welding obtained by means of the present invention strong and very resistant, preventing the problem which occurred when the cut and weld lines coincided.

The emission of a large amount of ultrasonic vibrations in a short period of time along with the configuration of the profile of the edge of the outer wall, the flanks of which form an acute angle, makes said outer wall penetrate both the sealing sheet and the peripheral flap of the container until they are finally cut. The acute angle of the edge of the outer wall of the mold allows for a penetration thereof in the plastic material, with a minimum friction and, as a result, preventing said plastic material from being excessively heated and melting.

On the other hand, the emission of a large amount of ultrasonic vibrations in a short period of time along with the configuration of the profile of the edge of the inner wall, the flanks of which form an obtuse angle, makes said inner wall weld the plastic material and not penetrate therein, as occurred with the outer wall. This is because the friction surface of the edge of the inner wall with the sealing sheet and the peripheral flap of the container or containers is of a large magnitude, the successive vibrations converting this friction energy into heat energy, which melts the plastic material both of the sealing sheet and of the peripheral flap of the container or containers and mixes them, forming the weld.

The fact that the outer wall has a larger height than the inner wall allows that when the outer wall has completely cut the sealing sheet and the peripheral flap of the container, the inner wall has only partially penetrated both without achieving traversing them and raising the temperature at the points of contact between said inner wall and the plastic material, making the weld line be inwardly from the cut line, both being spaced a certain distance, achieving a more resistant weld.

The inner wall has several configurations on its edge, especially depending on the thickness of the sealing sheet and on the peripheral flap of the container to be sealed.

Another possibility is that the inner wall and the outer wall are integrally joined together, forming a single wall with a "double" edge, an outer cutting profile which will have a configuration like that described above and an inner welding profile which could be continuous or broken.

Another embodiment of the invention, which is a particular variant of the case in which the inner wall and the outer wall form a single wall, includes separation areas situated in the profile itself of the wall, between both profiles and inwardly from the inner profile and parallelly thereto. In said areas, respective cavities are formed, the function of which, on one hand, is to produce a double weld line, and on the other hand to separate the weld lines from the cut line, with the advantages this implies, such as an increase of the rigidity of the weld bead and of the joint itself and an increase of the sealing.

Lastly, for the cases in which both the sealing sheet and the peripheral flap are of a small thickness, the configuration the mold adopts will be special, specifically it will only consist of one wall, the edge of the inner wall being transversely located in extension of the edge of the outer wall.

### Description of the Drawings

The features of the present invention will be better understood in a clearer manner with the following description, in which an embodiment example is shown, a set of drawings being attached as an integral part of said description, in which the following has been represented with an illustrative and never limiting character:
Figure 1 shows an exploded perspective view of the different components of the sealing device object of the present invention.
Figure 2 shows a perspective view of each of the molds constituting the sealing device.
Figure 3 shows an enlarged detail of the walls constituting the mold, according to a first embodiment of the invention.
Figure 4 shows a sectional view of the mold, according to a first embodiment of the invention, before beginning the cutting and welding process.
Figure 5 shows a sectional view of the mold, according to a first embodiment of the invention, once the cutting and welding process has ended.
Figure 6 shows a sectioned perspective view of part of the mold, according to a second embodiment of the invention.
Figure 7 shows a sectioned perspective view of part of the mold, according to a third embodiment of the invention.
Figure 8 shows a sectional view of the mold, according to a fourth embodiment of the invention, once the cutting and welding process has ended.

### Detailed Description of the Invention

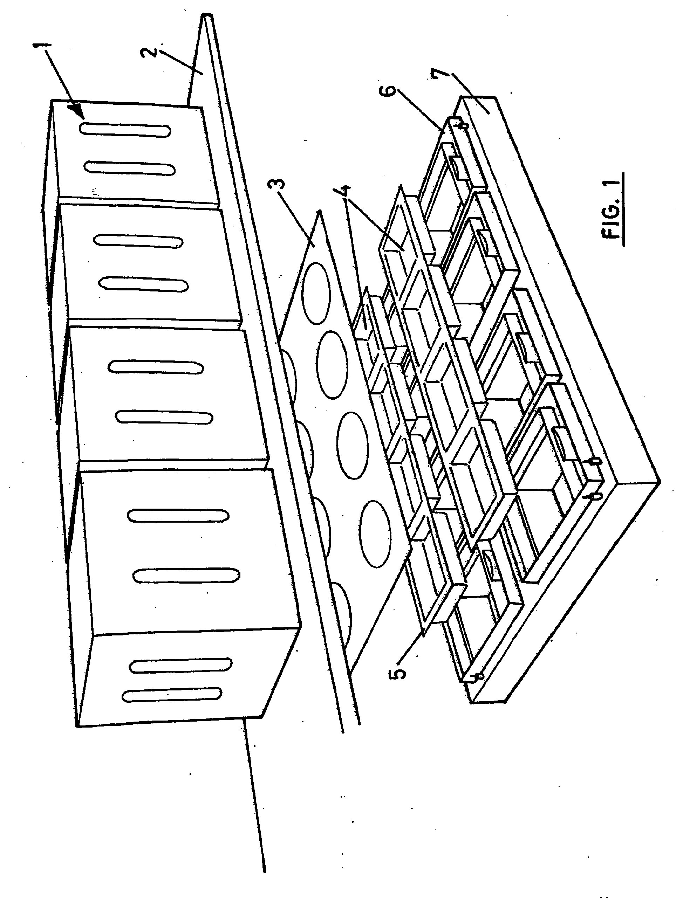

As shown in Figure 1, the device for sealing containers of plastic material object of the present invention consists of a plurality of sonotrodes 1 which are independent from one another, under which sonotrodes a Teflon sheet 2 is arranged, under which sheet is the sealing sheet 3, which is arranged just above the container or containers 4 to be sealed, which in this case are of an approximately rectangular configuration and are in two rows joined together by their peripheral flaps 5. The Teflon sheet 2 and the sealing sheet 3 and the containers 4 are supported on molds 6 such that the containers are housed therein, both the sealing sheet portion next to the peripheral flap 5 of the containers 4 and the peripheral flap 5 itself being supported on the edge of the wall of the mold 6.

The molds 6 are supported on a heating plate 7, the purpose of which is to preheat the molds to improve and accelerate the perfect functioning of the device.

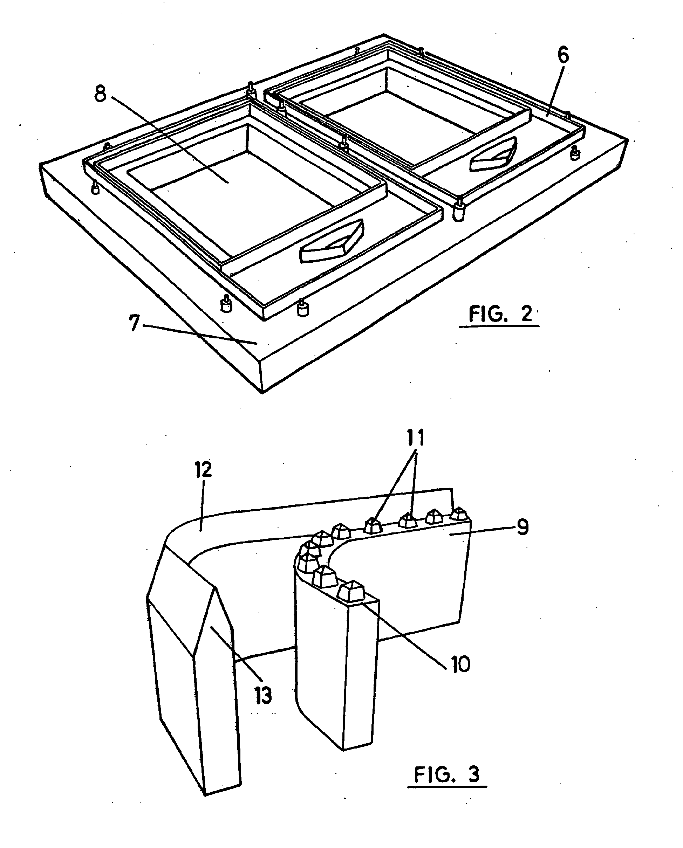

Figure 2 shows a pair of molds 6 arranged on a heating plate 7. The molds will have a shape similar to the shape of the container or containers 4 to be sealed and dimensions such that both the sealing sheet and the peripheral flap arranged as an extension in the mouth of the container are supported on the edge of the walls of the mold 6. Furthermore, the heating plate 7 will have openings 8 in which the container will be housed when the sealing operation thereof is occurring.

In a first embodiment of the invention, the mold will be made up of two concentric walls situated in coincidence with the peripheral flap surrounding the mouth of the container or containers to be sealed.

The mold has an inner wall 9 carrying out the welding between the sealing sheet 3 and the peripheral flap 5 of the mouth of the container 4, said inner wall 9 is finished in an edge of a large angular width profile, i.e. its flanks form an obtuse angle. In this first embodiment of the invention, the edge 10 of the inner wall 9 is broken and specifically adopts the shape of a plurality of projections 11 aligned with one another and with said inner wall.

The mold has another outer wall 12 next to this inner wall and concentrically thereto, of a slightly larger height, finished in an edge 13 of a small angular width profile, i.e. its flanks form an acute angle suitable for causing the cutting of the sealing sheet 3 and of said peripheral flap 5 at a certain separating distance from the weld line defined by the inner wall 9.

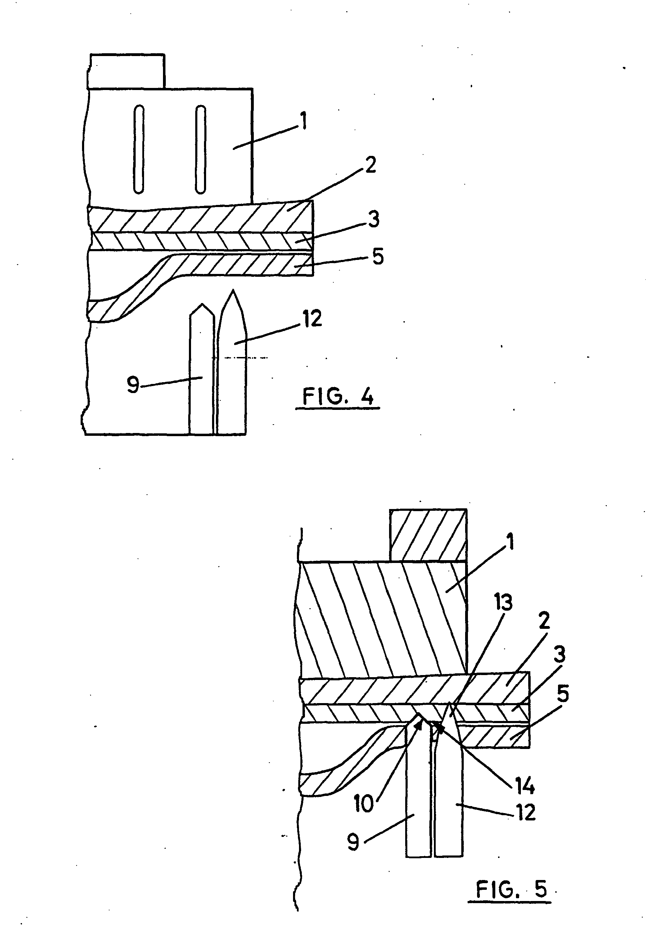

Figure 4 shows a partial detailed sectional view of the cutting and welding area, prior to beginning the welding process, it can be seen how the outer wall 12 of the mold is arranged next to the inner wall 9 thereof, perpendicularly to the peripheral flap 5 of the mouth of the container, next, above the flap, the sealing sheet 3 is arranged, and above that is the Teflon sheet 2 on which the sonotrode 1 is situated.

Teflon is the anti-adherent material which does not stick to the plastic material when the latter is hot, furthermore it withstands a higher temperature than that of the melting point of said material and transmits ultrasonic vibrations very well.

The Teflon sheet 2 inserted between the sonotrode 1 and the sealing sheet 3 is very important because thanks to it, the following effects are achieved:
- preventing direct contact between the metals and absorbing the noise,
- preventing abrasion of the edge of both walls of the mold and, accordingly, their premature wear,
- attenuating the destructive friction which the direct contact of the sonotrode 1 with the sealing sheet 3 may generate,
- improving the transmission of the vibrations and preventing damage of the sonotrode 1 due to an excessive vibration transmitted thereto,
- improving control of the critical conditions between the welding point and the destruction point.

In Figure 5, a partial detailed sectional view of the cutting and welding area when the welding and cutting process has occurred, can be seen, it can be seen how the outer wall 12 of the mold has cut both the sealing sheet 3 and the peripheral flap of the mouth of the container 4.

The inner wall 9 of the mold has gone beyond the thickness of the peripheral flap 5 of the container and has partially penetrated the sealing sheet 3, there being an area 14 of melted and mixed plastic material around the edge 10 of the inner wall 9, which in this case is configured in the form of projections 13.

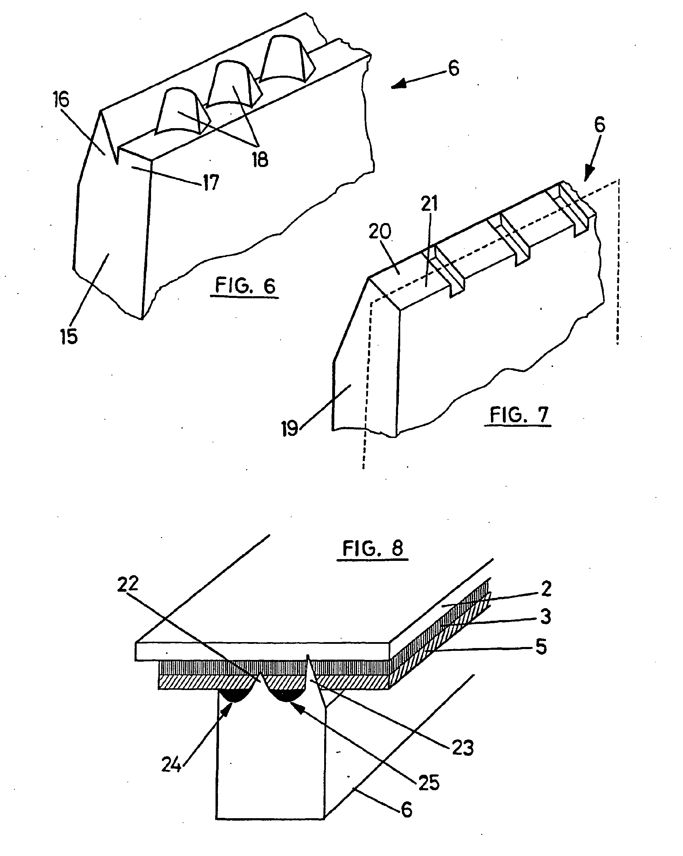

In a second embodiment of the invention, both walls of the mold 6 are joined, forming a single wall 15, as shown in Figure 6. In this case, the edge of the single wall 15 has a "double" profile, on one hand it consists of an continuous outer profile 16, and on the other it consists of a broken inner profile 17, configured in the form of projections 18. Said projections for this second embodiment of the invention have a serrated configuration and are slightly tilted, which gives them a large friction surface aiding in the melting of the plastic material.

In the particular case that both the sealing sheet 3 and the peripheral flap 5 of the container are of a small thickness, a third preferred embodiment according to the object of the invention has been considered. As can be seen in Figure 7, the mold 6 will be special for this particular case, it will specifically consist of only one wall 19, the edge of the inner wall being transversally located in extension of the edge 20 of the outer wall, the edge 21 of the inner wall being broken in this case.

Figure 8 shows a fourth embodiment of the invention, which is a particular variant of the case in which the inner wall and the outer wall form a single wall. In this case, separation areas are included in the wall of the mold 6, the first area 24 situated between the inner profile 22 and the outer profile 23, and the second area 25 situated inwardly from the inner profile 22. Respective cavities are arranged throughout both areas parallelly to said inner and outer profiles.

As is seen in Figure 8, the sealing sheet 3 is arranged under the Teflon sheet 2, and under the sealing sheet is the peripheral flap 5 of the mouth of the container. In this representation, the cutting and welding movement has ended and the plastic material which has been heated by the successive vibrations of the sonotrode 1 (not shown in the Figure) is melted and deposited in the first area 24 and in the second area 25. With this arrangement of the profiles which are separated by said areas, it is achieved that on one hand, a double weld line is obtained, and on the other one, the weld lines are separated from the cut lines, increasing the rigidity of the weld bead and of the joint itself, and also increasing the sealing thereof.

## Claims

1. A system for sealing containers of plastic material, especially for sealing containers the mouth of which is surrounded by a peripheral flap (5) in extension of the wall, consisting of arranging a sealing sheet (3) on the mouth of the container (4) or containers to be sealed, supporting the peripheral flap (5) on a welding mold, and applying ultrasonic vibrations on the sealing sheet (3), in coincidence with a mold, by means of independent sonotrodes (1), **characterized in that** the mold comprises two concentric walls (9, 12) situated in coincidence with the peripheral flap (5) surrounding the mouth of the container or containers to be sealed,
an inner wall (9):
having a broken edge
allowing for the welding between the sealing sheet (3) and the peripheral flap (5) of the mouth,
an outer wall (12), of a slightly larger height, finished in an angled edge profile to cause the cutting of the sealing sheet (3) and of said peripheral flap (5) at a certain variable distance from the weld line between said sheet (3) and peripheral flap (5).

2. The system of claim 1, **characterized in that** the inner wall (9) and the outer wall (12) are separated and are independent.

3. The system of claim 1, **characterized in that** the inner wall (9) and the outer wall (12) are joined, forming a single wall (15).

4. The system of claim 3, **characterized in that** two areas (24, 25) are arranged between an inner profile (22) and an outer profile (23), parallel to said profiles (22, 23) and inwardly from the inner profile (22), throughout which areas (24, 25) cavities are arranged in which the plastic material accumulates once it has been melted.

5. The system of claim 3, **characterized in that** the edge of the inner wall (9) is transversally located in extension of the edge of the outer wall (12).

## Patentansprüche

1. System zur Versiegelung von Behältern aus Kunststoff, insbesondere zur Versiegelung von Behältern, deren Öffnung von einem peripheren Saum (5) in Fortsetzung der Wand umgeben ist, das daraus besteht, dass man eine Versiegelungsschicht (3) auf der Öffnung des Behälters (4) oder der Behälter, der bzw. die versiegelt werden soll oder sollen, platziert, den peripheren Saum auf eine Schweißform auflegt und die Versiegelungsschicht (3), in Übereinstimmung mit einer Gießform, durch unabhängige Sonotroden (1) mit Ultraschallschwingungen behandelt, **dadurch gekennzeichnet, dass** die Form zwei konzentrische Wände (9, 12) umfasst, die in Übereinstimmung mit dem peripheren Saum (5) gelegen sind, der die Öffnung des Behälters oder der Behälter, der bzw. die versiegelt werden soll oder sollen, umgibt, nämlich
eine innere Wand (9), die:
eine durchbrochene Kante besitzt und
das Verschweißen der Versiegelungsschicht (3) mit dem peripheren Saum (5) der Öffnung erlaubt,
eine äußere Wand (12) von geringfügig größerer Höhe, die in einem Winkelkantenprofil ausgeführt ist, um das Durchschneiden der Versiegelungsschicht (3) und des peripheren Saums (5) in einem bestimmten variablen Abstand von der Verschweißungslinie der Schicht (3) mit dem peripheren Saum (5) zu bewirken.

2. System nach Anspruch 1, **dadurch gekennzeichnet, dass** die innere Wand (9) und die äußere Wand (12) voneinander getrennt und unabhängig sind.

3. System nach Anspruch 1, **dadurch gekennzeichnet, dass** die innere Wand (9) und die äußere Wand (12) zusammenhängen und eine einheitliche Wand (15) bilden.

4. System nach Anspruch 3, **dadurch gekennzeichnet, dass** zwei Flächen (24, 25) zwischen einem inneren Profil (22) und einem äußeren Profil (23) angeordnet sind, parallel zu diesen Profilen (22, 23) und einwärts von dem inneren Profil (22), wobei im gesamten Bereich dieser Flächen (24, 25) Vertiefungen angeordnet sind, in denen sich der Kunststoff, sobald es geschmolzen ist, ansammelt.

5. System nach Anspruch 3, **dadurch gekennzeichnet, dass** die Kante der inneren Wand (9) transversal in Fortsetzung der Kante der äußeren Wand (12) angebracht ist.

## Revendications

1. Système destiné à fermer des récipients en matière plastique, en particulier fermer des récipients dont l'ouverture est entourée d'un rabat périphérique (5) en extension par rapport à la paroi, consistant à agencer une feuille de fermeture (3) sur l'ouverture du récipient (4) ou des récipients qui doivent être fermés, supporter le rabat périphérique (5) sur un moule de soudure, et appliquer des vibrations ultrasonores sur la feuille de fermeture (3), en coïncidence avec un moule, au moyen de sonotrodes (1) indépendantes, **caractérisé en ce que** le moule comprend deux parois concentriques (9, 12) disposées pour coïncider avec le rabat périphérique (5) entourant l'orifice du récipient ou des récipients qui doivent être fermés,
une paroi intérieure (9) :
comprenant un bord coupé,
permettant la soudure entre la feuille de fermeture (3) et le rabat périphérique (5) de l'orifice,
une paroi extérieure (12), de hauteur légèrement supérieure, se terminant par un profil de bord oblique pour entraîner la coupure de la feuille de fermeture (3) et dudit rabat périphérique (5) à une certaine distance variable de la ligne de soudure entre ladite feuille (3) et le rabat périphérique (5).

2. Système selon la revendication 1, **caractérisé en ce que** la paroi intérieure (9) et la paroi extérieure (12) sont séparées et sont indépendantes.

3. Système selon la revendication 1, **caractérisé en ce que** la paroi intérieure (9) et la paroi extérieure (12) sont jointes, formant une seule paroi (15).

4. Système selon la revendication 3, **caractérisé en ce que** deux zones (24, 25) sont agencées entre un profil intérieur (22) et un profil extérieur (23), parallèles auxdits profils (22, 23) et vers l'intérieur par rapport au dit profil (22), zones (24, 25) au travers desquelles des cavités sont agencées dans lesquelles la matière plastique s'accumule une fois qu'elle a fondu.

5. Système selon la revendication 3, **caractérisé en ce que** le bord de la paroi intérieure (9) est situé transversalement en extension par rapport au bord de la paroi extérieure (12).
